**Europäisches Patentamt**

**European Patent Office**

**Office européen des brevets**

(19)

(11) Numéro de publication: **0 020 227**
**A1**

## (12) DEMANDE DE BREVET EUROPEEN

(21) Numéro de dépôt: **80400676.5**

(51) Int. Cl.³: **C 12 G 1/06**, C 12 L 11/00

(22) Date de dépôt: **14.05.80**

(30) Priorité: 16.05.79 FR 7912443
12.07.79 FR 7918104

(71) Demandeur: **CENTRE DE DIFFUSION DE LA METHODE CHAMPENOISE, 79 avenue A.A. Thévenet, Magenta, Marne (FR)**

(72) Inventeur: **Cazals, Claude Olivier Ernest, Clos du Château Oger, Marne (FR)**
Inventeur: **Ducoin, Jacques Henri Charles, 11 rue Carnot, Mareuil-sur-Ay, Marne (FR)**

(43) Date de publication de la demande: **10.12.80**
**Bulletin 80/25**

(74) Mandataire: **Casanova, André CABINET ARMENGAUD JEUNE CASANOVA, AKERMAN, LEPEUDRY et al, 23 boulevard de Strasbourg, F-75010 Paris (FR)**

(84) Etats contractants désignés: **AT CH DE IT LI LU**

(54) **Appareil permettant le traitement du vin selon la méthode champenoise.**

(57) Casier parallèlépipèdique, ouvert sur une face, qui est opposée à un fond, muni d'éléments d'appui pour les goulots d'une couche de bouteilles, ledit casier comportant deux séries de pieds ou patins permettant de le poser dans une première position, où les bouteilles sont couchées, et une seconde position, perpendiculaire à la première, où les bouteilles sont verticales avec leur goulot tourné vers le bas.

Selon l'invention les parois latérales du casier perpendiculaires à son fond sont pourvues, vers l'intérieur du casier, de rails (2d, 3d), disposés perpendiculairement au fond du casier de manière à guider l'introduction des bouteilles (B, B', B''...) en position couchée, par la face ouverte du casier, et à assurer le calage des bouteilles placées contre lesdites parois latérales.

Applications: facilité de chargement et de déchargement des casiers.

Appareillage permettant le traitement du vin selon la méthode champenoise.

- - - - -

La présente invention concerne un appareillage permettant de traiter du vin en bouteilles selon la méthode champenoise.

Le brevet français N° 69.13803 que les demandeurs ont déposé le 30 avril 1969 concerne un appareillage de ce type, qui est caractérisé par un casier agencé de façon à pouvoir recevoir au moins une assise de bouteilles disposées côte à côte parallèlement les unes aux autres, et comportant deux séries de pieds permettant de le poser dans deux positions perpendiculaires l'une à l'autre, l'une dans laquelle les bouteilles sont couchées et l'autre dans laquelle lesdites bouteilles sont verticales, leur goulot étant tourné vers le bas.
La présente invention concerne divers perfectionnements de l'appareillage selon le brevet cité, permettant notamment de faciliter le chargement et le déchargement du casier avec les bouteilles à traiter.

L'appareillage selon la présente invention comporte un casier en forme de parallélépipède rectangle, ouvert sur une face, qui est opposée à un fond, muni d'éléments d'appui pour les goulots d'une couche de bouteilles, remplissant complètement ledit casier éventuellement avec plusieurs autres couches superposées de bouteilles, calées les unes contre les autres, ledit casier comportant deux séries de pieds ou patins, permettant de le poser dans une première position, où les bouteilles sont couchées, et une seconde position, perpendiculaire à la première, où les bouteilles sont verticales avec leur goulot tourné vers le bas ; il est caractérisé en ce que les parois latérales du casier, perpendiculaires à son fond, sont pourvues, vers l'intérieur du casier, de rails, disposés perpendiculairement au fond du casier, de manière à guider l'introduction des bouteilles, en position couchée, par la face ouverte du casier, et à assurer le calage des bouteilles placées contre lesdites parois latérales.

Cette disposition selon la présente invention facilite non seulement le chargement du casier avec les bouteilles à traiter, mais en outre elle en autorise le chargement automatique, c'est-à-dire mécanique, par exemple à l'aide d'un transporteur ; en effet, lorsque la première couche de bouteilles est amenée par le transporteur au niveau de la paroi latérale du casier qui est munie de pieds (et qui est horizontale dans la position de chargement du casier), du côté de la face ouverte du casier - c'est-à-dire à l'opposé de son fond, alors vertical - le transporteur dépose la première rangée de bouteilles sur le bord libre de ladite paroi latérale du casier, puis cette première rangée de bouteilles est poussée, en direction du fond vertical du casier, par la seconde rangée de bouteilles, encore entraînée par le transporteur ; au cours de leur déplacement vers le fond vertical du casier, les parois latérales des bouteilles de la première rangée sont alors guidées par les rails de guidage qui sont disposés convenablement à cet effet sur la face intérieure de la paroi latérale du casier, alors horizontale. Ce processus de chargement de la première couche, inférieure, de bouteilles, se poursuit jusqu'à ce que les goulots des bouteilles de la première rangée arrivent au contact du fond, vertical, du casier. Les couches supérieures de bouteilles peuvent être alors chargées successivement de façon automatique, en utilisant à chaque fois un transporteur qui amène les bouteilles au niveau de la face supérieure de la couche de bouteilles précédemment chargée dans le casier. Lors du chargement de chaque couche de bouteilles, les bouteilles "extrêmes" de la couche, c'est-à-dire celles qui doivent être placées au contact des parois latérales, verticales, du casier, sont également guidées par les rails dont sont pourvues les faces intérieures desdites parois latérales ; bien entendu, les autres bouteilles de chacune des couches supérieures sont guidées par les bouteilles de la couche immédiatement inférieure, entre lesquelles elles viennent s'encastrer.

Dans une forme de réalisation préférée de l'invention, les rails de guidage desdites parois latérales du casier sont constitués par des tiges ou des fils rigides, fixés, notamment soudés sur les faces intérieures desdites parois latérales ; dans ce cas, chacune desdites parois latérales peut être formée essentiellement, vers l'intérieur du casier, par les tiges ou fils constituant les rails, et, vers l'extérieur, par des tiges ou fils rigides, ou des profilés, transversaux, soudés aux précédents, ainsi que, par leurs extrémités, à des profilés rigides, formant les bords de la paroi. Tout en permettant le chargement automatique des bouteilles, cette forme de réalisation préférée du casier selon la présente invention, se distingue par un poids relativement faible, allié à une résistance mécanique très grande.

Selon une autre caractéristique de l'invention, le casier, en forme de parallélépipède rectangle, a l'une de ses parois latérales, perpendiculaires au fond du casier, qui est montée de façon amovible, notamment de façon à pouvoir être au moins en partie enlevée ou rabattue vers le fond, pour faciliter l'extraction des bouteilles en position verticale.

Grâce à cette disposition, lorsque le casier est en position de déchargement, et que, pour cela, son fond est horizontal, et supporte les goulots des bouteilles, maintenues verticales, la paroi amovible du casier est elle-même verticale, si bien que son enlèvement, ou tout au moins son rabattement, éventuellement partiel, vers le bas, permet d'accéder latéralement aux différentes couches de bouteilles; ceci facilite considérablement leur extraction hors du casier, notamment pour les couches profondes de bouteilles, qu'il n'est plus ainsi nécessaire, pour cela, de remonter manuellement jusqu'à la face supérieure, ouverte, du casier. De préférence, la paroi amovible du casier comprend deux parties amovibles séparément, se raccordant dans un plan horizontal, de préférence à mi-hauteur de la paroi amovible.

A titre d'exemple, on a décrit ci-dessous et illustré schématiquement au dessin annexé une forme de réalisation du casier de l'appareillage selon la présente invention.

- La figure 1 est une vue en perspective de ce casier, entièrement fermé, et posé sur le sol par les pieds ou patins dont est muni son fond ;

- la figure 2 est une vue explosée du casier de la figure 1 ;

- la figure 3 est une vue du casier de la figure 1 en coupe par un plan vertical, perpendiculaire à sa paroi latérale amovible ;

- les figures 4 à 8 illustrent les phases successives du traitement, par la méthode champenoise, de bouteilles de vin, introduites dans le casier de la figure 1, de façon à le remplir complètement ;

- la figure 9 est un schéma illustrant le guidage des bouteilles lors de leur introduction dans le casier de la figure 1 ;

- les figures 10 à 12 sont des vues en bout de l'un des loquets du panneau amovible dont est pourvu le casier de la figure 1, pour trois positions différentes du loquet ;

- les figures 13 à 15 sont des vues en plan correspondant respectivement aux figures 10 à 12 ;

- la figure 16 est une vue en perspective, avec arrachement partiel, d'un casier selon la présente invention, muni de certaines de ses grilles planes ;

- la figure 17 est une vue en perspective de l'un des éléments de grille dont est muni le casier de la figure 16 ; et

-la figure 18 est une vue de face du casier de la figure 16, après enlèvement de sa paroi latérale amovible ; elle illustre l'une des phases de l'extraction manuelle des bouteilles hors dudit casier.

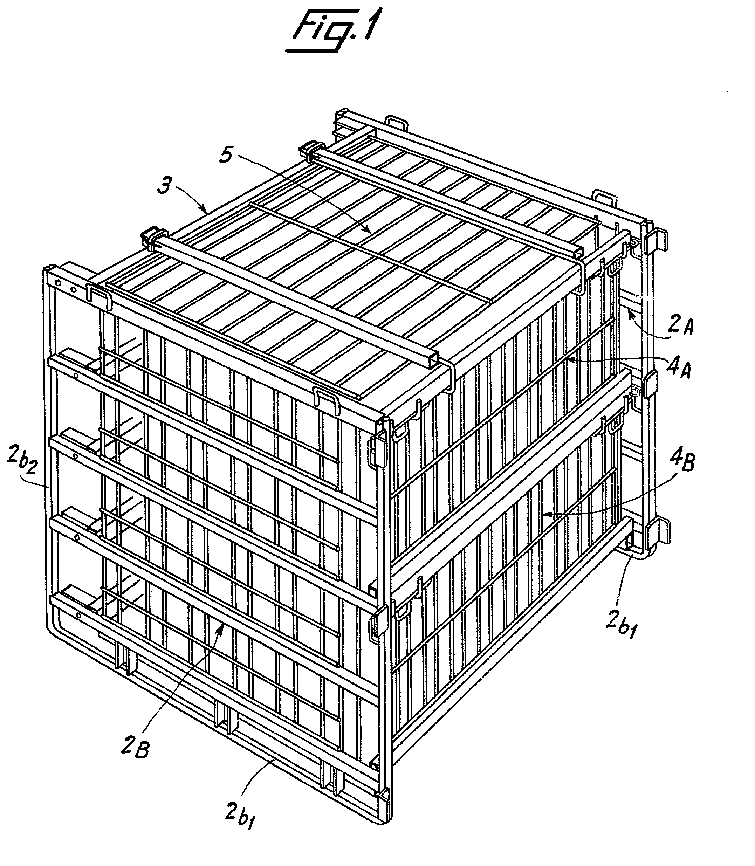

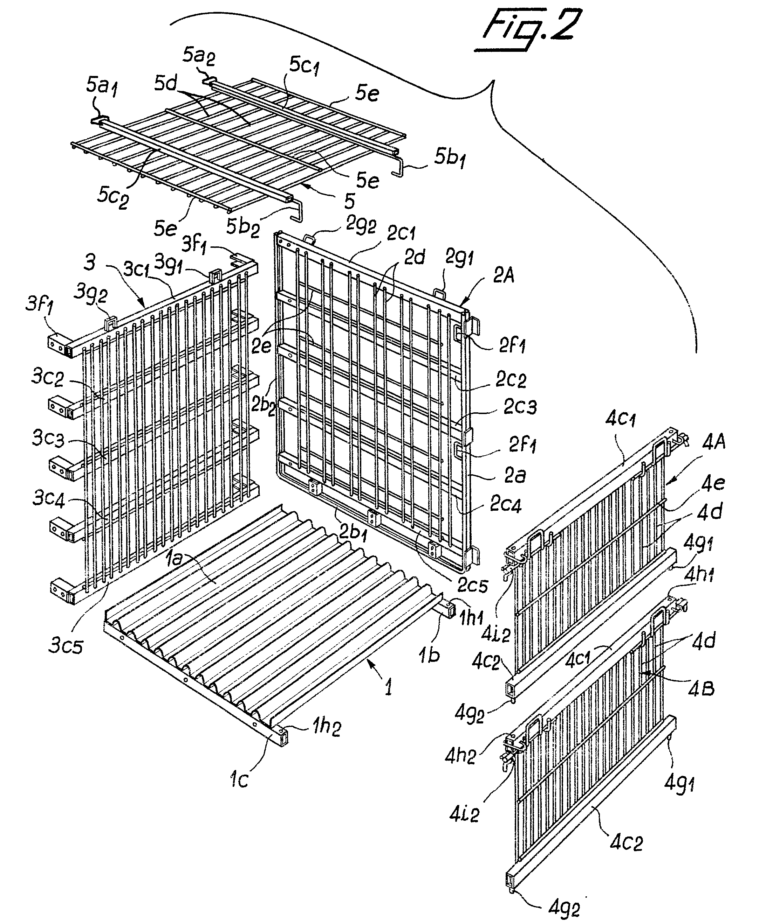

Comme visible sur les figures 1 à 3, le casier selon la présente invention est en forme de parallélépipède rectangle, et il comporte les six parois suivantes : son fond $\underline{1}$ est constitué essentiellement par une tôle $\underline{1a}$, présentant des nervures parallèles, régulières, vers l'intérieur du casier ; il est fixé, vers l'extérieur du casier, à deux profilés métalliques rigides, $1b$ et $1c$, traversés par des trous de fixation appropriés. Deux parois latérales fixes, 2A et 2B, du casier comportent, sur trois côtés, un encadrement tubulaire $2a$, formant, à la partie inférieure, un premier pied ou patin, $2b_1$ latéralement, un second pied ou patin $2b_2$, ainsi que des profilés rigides, $2c_1$, formant le bord supérieur de la paroi, et $2c_2$ à $2c_5$, formant des entre-toises. Sur les faces des profilés, $2c_1$ à $2c_5$, tournées vers l'intérieur du casier, sont soudés des fils rigides, généralement métalliques, tels que $2d$, disposés perpendiculairement au fond 1 du casier. Sur ces fils verticaux, $2d$, d'autres fils métalliques, $2e$, horizontaux, sont soudés, du côté tourné vers l'extérieur du casier. Les fils $2d$ et $2e$ forment ainsi des croisillons rigides, mais les parties des fils verticaux $2d$, qui sont tournées vers l'intérieur du casier, ne comportent aucune saillie entre les profilés $2c_1$ et $2c_5$ auxquels sont soudées les extrémités respectives de ces fils $2d$. Une troisième cloison fixe, 3, du casier est également constituée essentiellement par des profilés rigides horizontaux $3c_1$ à $3c_5$, réunis entre eux par des fils métalliques verticaux $3d$, soudés sur les faces de ces profilés rigides, tournées vers l'intérieur du casier. Des fers tels que $3f_1$ sont soudés, vers l'extérieur du casier, à chacune des extrémités de chaque profilé horizontal tel que $3c_1$. Les différentes parois 1, 2A, 2B et 3 du casier sont assujetties les unes aux autres, de préférence par des écrous et des vis, traversant des perçages appropriés de certains de leurs profilés (par exemple les profilés $1b$ et $1c$ du fond $1$ sont vissés aux profilés intérieurs, $2c_5$, des parois latérales 2A et 2b).

La face du casier, opposée à sa paroi latérale fixe, 3, peut être fermée par une paroi latérale amovible, en deux parties, 4A et 4B. Chacune des deux parties, 4A et 4B, est constituée essentiellement par deux profilés horizontaux $4c_1$ et $4c_2$, dont les faces destinées à être tournées vers l'intérieur du casier sont reliées entre elles par des fils rigides, verticaux, $4d$, ayant leurs extrémités soudées auxdites faces des profilés. Les fils verticaux, $4d$, de chaque partie, 4A ou 4B, sont rigidifiés par un fil transversal, $4e$, qui est soudé vers le milieu des fils verticaux, $4d$, du côté tourné vers l'extérieur du casier. Le profilé $4c_2$, constituant le bord inférieur de chacune des deux parties, 4A et 4B, de la paroi amovible, comporte au moins deux chevilles, $4g_1$, $4g_2$, pouvant être engagées dans des trous correspondants, $1h_1$ et $1h_2$, du fond $1$, du casier pour la partie 4B, ou bien, pour la partie 4A, dans des trous correspondants $4h_1$ et $4h_2$ du bord supérieur, $4c_1$, de la partie immédiatement inférieure, 4B. Par ailleurs, le bord supérieur, $4c_1$, de chacune des parties, 4A et 4B, de la paroi amovible est muni, à ses extrémités, de loquets à crochet, $4i_1$ et $4i_2$, aménagés de façon à coopérer avec les bords d'ouvertures correspondantes des deux parois latérales, voisines, 2A et 2B respectivement. Dans la forme de réalisation considérée, ces bords des ouvertures des parois latérales, 2A et 2B, avec lesquels viennent coopérer les crochets respectifs des loquets, $4i_1$, $4i_2$, sont formés par des boucles de fil rigide, $2f_1$, $2f_2$, soudées aux bords verticaux correspondants, $2a$, des panneaux 2A et 2B.

       D'autre part, dans la forme de réalisation considérée du casier selon la présente invention, son ouverture supérieure, opposée au fond 1, peut être également fermée par un panneau amovible, 5, formé par exemple par un treillis de fils métalliques rigides, $5d$ et $5e$, perpendiculaires les uns aux autres, et soudés, entre eux en leurs points de croisement, ainsi qu'à deux profilés métalliques très rigides, $5c_1$ et $5c_2$, formant armatures. Ce panneau amovible, 5, peut être fixé par exemple aux bords supérieurs, $3c_1$ du panneau 3, et $4c_1$, du demi-panneau supérieur 4A ; dans la forme de réalisation considérée, des boucles pivotantes, $5a_1$ et $5a_2$, sont montées aux extrémités correspondantes des profilés, $5c_1$ et $5c_2$, de façon à pouvoir être engagées respectivement sur des cavaliers, $3g_1$ et $3g_2$, eux-mêmes soudés sur le profilé $3c_1$ du panneau 3, tandis que les autres extrémités des profilés, $5c_1$ et $5c_2$, portent des

crochets $5b_1$ et $5b_2$, recourbés vers le bas, de manière à venir s'engager en dessous du profilé, $4c_1$, du demi-panneau 4A.

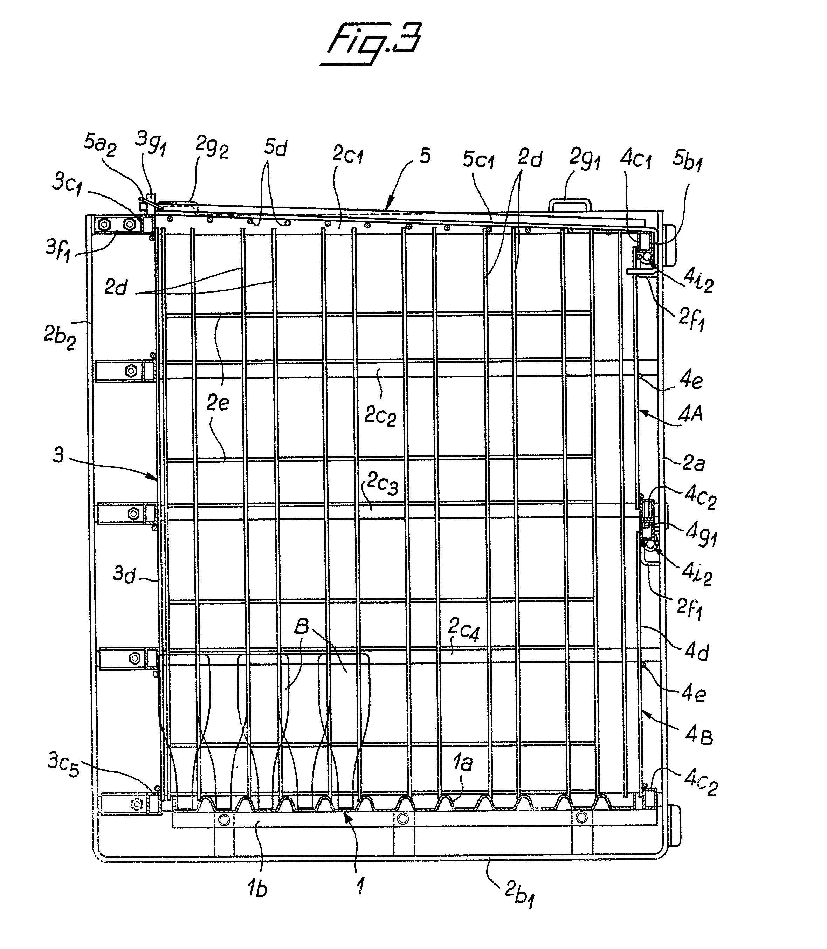

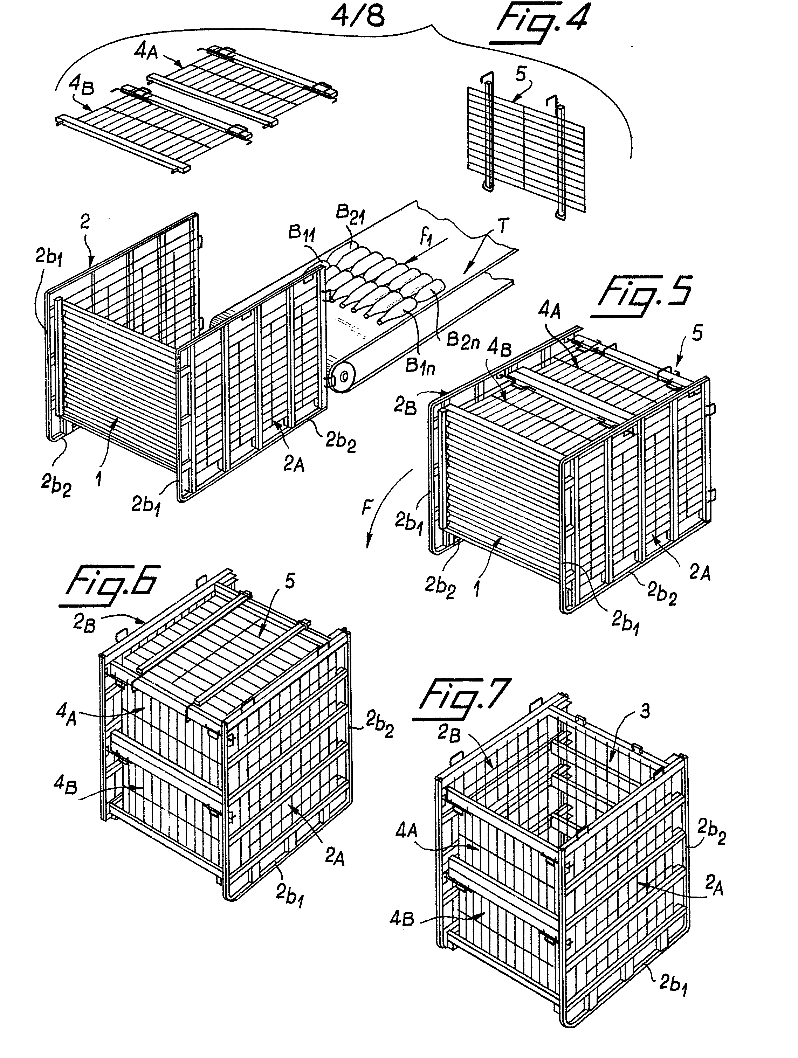

On va décrire maintenant, à l'aide des figures 4 à 8, le mode d'emploi du casier illustré sur les figures 1 à 3 pour traiter du vin en bouteilles selon la méthode champenoise :

Les panneaux amovibles 4a, 4B et 5 du casier ayant été séparés de ce dernier, ledit casier est posé sur le sol par ses seconds pieds ou patins, $2b_2$, de façon que son fond, $\underline{1}$, soit vertical, comme visible sur la figure 4. Un transporteur, T, par exemple à bande, est disposé de manière à amener les bouteilles sur la face supérieure, qui est tournée vers l'intérieur du casier, de sa paroi 3, qui est alors horizontale. Sur la bande du transporteur, T, les bouteilles contenant le vin à traiter, qui sont destinées à former une couche inférieure de bouteilles sur la paroi horizontale 3 du casier, sont disposées les unes par rapport aux autres, de préférence dans des positions relatives identiques à celles qu'elles devront prendre dans le casier; en d'autres termes, les $\underline{n}$ bouteilles, $B_{11}$ à $B_{1n}$, de la première rangée (dans le sens d'avance du transporteur T, indiqué par la flèche f) sont disposées les unes contre les autres, avec leurs goulots tournés vers le casier ; les $\underline{n}$ bouteilles de la seconde rangée $B_{21}$ à $B_{2n}$ sont disposées de la même façon les unes contre les autres, avec leurs goulots engagés respectivement dans les cavités des fonds des bouteilles de la rangée précédente, $B_{11}$ à $B_{1n}$, et il en est de même pour les rangées suivantes, non représentées, de bouteilles. Lorsque le transporteur T a déposé la première rangée de bouteilles, $B_{11}$ à $B_{1n}$, sur le bord $3c_1$ du panneau horizontal 3, ladite première rangée de bouteilles vient s'encastrer exactement entre les deux parois verticales, 2A et 2B, du casier, et, lorsque cette première rangée de bouteilles est poussée sur la paroi, 3, du casier par les bouteilles de la seconde rangée, $B_{21}$ à $B_{2n}$, encore portées par le transporteur T, les bouteilles de ladite première rangée sont guidées, dans leur mouvement en direction du fond, $\underline{1}$, du casier, par les fils rigides continus, $3\underline{d}$, qui n'opposent aucune saillie à la progression desdites bouteilles $B_{11}$ à $B_{1n}$, depuis le bord $3c_1$ du panneau horizontal 3 jusqu'à son bord, $3c_5$, situé au niveau du fond vertical $\underline{1}$.

La figure 9 montre comment les bouteilles de la première rangée $B_{11}$, $B_{12}$... de la couche inférieure sont guidées, dans leur progression vers le fond $\underline{1}$, du casier, par les fils rigides, 3d, soudés sur la face supérieure du panneau horizontal 3 avec des écartements $e_1$, $e_2$, adaptés aux diamètres respectifs des bouteilles et des fils 3d ; on y voit également le guidage de la paroi latérale de la bouteille extrême, $B_{11}$, de ladite première rangée, par deux des fils rigides $2\underline{d}$, fixés avec un écartement $e_2$ sur la face interne du panneau 2B. Les fils rigides mentionnés, $3\underline{d}$ et $2\underline{d}$, forment en quelque sorte des rails, disposés perpendiculairement au fond $\underline{1}$ du casier, de manière à guider l'introduction des bouteilles en position couchée. Les mêmes fils, $3\underline{d}$, $2\underline{d}$, assurent ensuite le calage des bouteilles $B_{11}$, $B_{12}$... lorsque leurs goulots sont parvenus au contact de la tôle nervurée, $1\underline{a}$, du fond $\underline{1}$ ; la partie inférieure de la figure 3 montre clairement que les goulots des différentes bouteilles de la première rangée $B_{11}$, $B_{12}$... sont alors respectivement engagés entre les nervures de la tôle $1\underline{a}$. Lorsque le transporteur, T, a ainsi chargé la couche inférieure de bouteilles sur le panneau horizontal 3 du casier, la position relative de ces deux éléments est modifiée en hauteur - soit par déplacement du casier soit par déplacement du transporteur -, de manière que ledit transporteur puisse charger la seconde couche de bouteilles par dessus la première ; on voit sur la figure 9 que la seconde couche de bouteilles $B'_{11}$, $B'_{12}$... est disposée en quinconce par dessus la première couche $B_{11}$, $B_{12}$..., si bien que, au cours du chargement, les bouteilles de la seconde couche sont guidées, dans leur progression vers le fond vertical $\underline{1}$ du casier, par les intervalles entre les parois latérales des bouteilles contiguës de la couche inférieure ; la partie supérieure de la figure 9 montre en outre que, au moins pour une couche sur deux, chaque bouteille extrême d'une rangée de la couche, qui vient au contact d'un panneau latéral tel que 2b, est guidée dans sa progression par des fils rigides, 2d, d'écartement $e_2$, qui assurent en outre le calage de la bouteille extrême lorsqu'elle est parvenue dans sa position de repos dans le casier (l'écartement $e_3$ étant un peu supérieur au diamètre d'une bouteille).

Lorsque le casier est entièrement chargé avec les bouteilles à traiter, on met en place les demi-panneaux, 4B puis 4A, et on les verrouille à l'aide de leurs loquets $4i_1$, $4i_2$. On fixe ensuite le panneau, 5, en engageant d'abord ses crochets, $5b_1$ et $5b_2$, par dessus le bord $4c_1$ du demi-panneau 4A, et en rabattant ensuite les boucles pivotantes, $5a_1$ et $5a_2$, sur les cavaliers, $3g_1$ et $3g_2$, du bord $3c_1$ du panneau 3. Le casier, ainsi fermé de tous côtés, est représenté sur la figure 5.

A l'aide d'un appareil de levage, dont des crochets sont engagés par exemple dans des boucles telles que $2g_1$, soudées aux bords $2c_1$ des panneaux latéraux 2A et 2B, on fait pivoter l'ensemble du casier et de sa charge dans le sens de la flèche F (figure 5), de façon à l'amener dans sa position illustrée schématiquement sur la figure 6, où il repose sur le sol, non plus par ses patins $2b_2$, mais par ses patins $2b_1$. Dans cette nouvelle position du casier, toutes les bouteilles qu'il contient se trouvent alors en position verticale, le goulot tourné vers le bas, prenant appui dans la cavité du fond de la bouteille immédiatement inférieure, ou bien dans l'intervalle entre deux nervures de la plaque nervurée, 1a, du fond 1, pour les bouteilles qui en sont les plus proches.

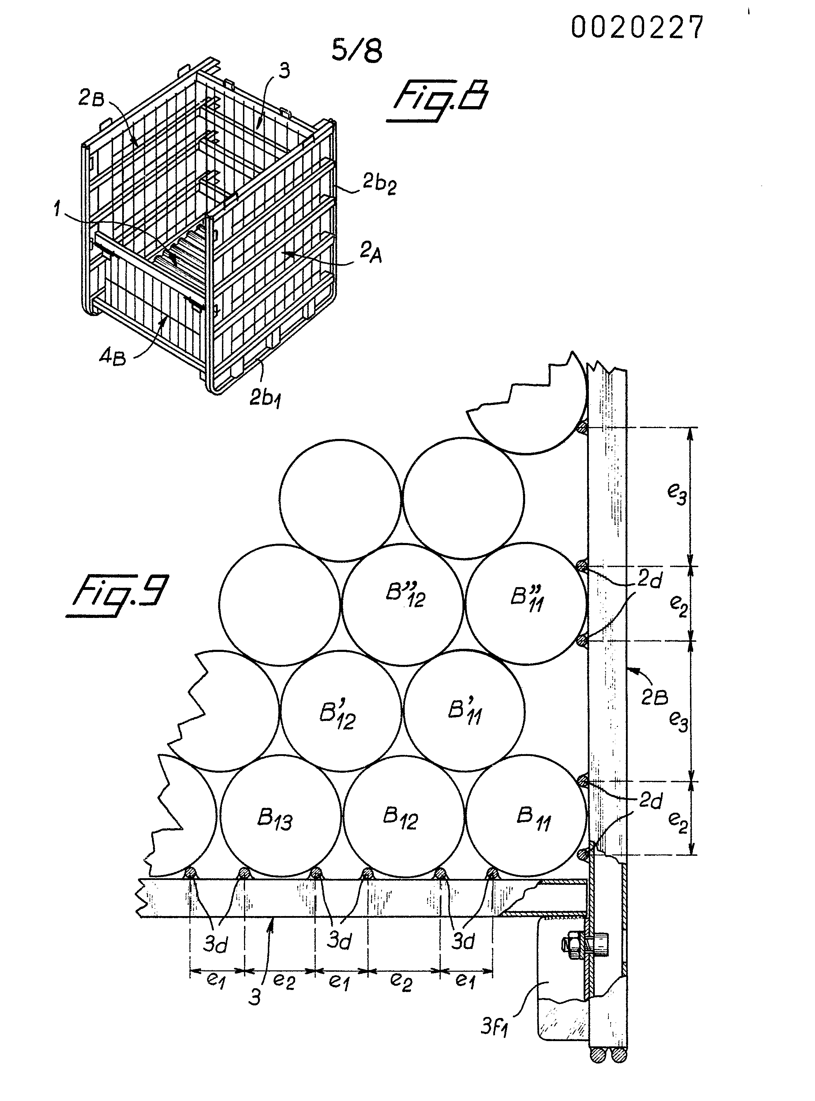

Pour procéder ensuite au déchargement mécanique du casier, on enlève le panneau amovible, 5, de façon à dégager son ouverture, maintenant tournée vers le haut, comme visible sur la figure 7. Ceci permet alors d'extraire mécaniquement, hors du casier, les bouteilles de la couche supérieure, par exemple en les faisant saisir par leurs fonds respectifs, tournés vers le haut, à l'aide de suçoirs. On peut aussi procéder au déchargement manuel des couches supérieures de bouteilles ; pour cela, il faut de préférence démonter en outre le demi-panneau amovible supérieur, 4A, comme illustré sur la figure 8, puis, lorsqu'environ la moitié des couches supérieures de bouteilles a été déchargée, démonter le demi-panneau inférieur, 4b, pour procéder au déchargement manuel des couches inférieures de bouteilles.

Bien entendu, le pivotement du casier dans le sens de la flèche F (figure 5), qui fait passer les bouteilles à traiter, enfermées dans le casier, de leur position horizontale à leur position verticale, le goulot étant tourné vers le bas, peut aussi être effectué en utilisant un chevalet tel que celui décrit dans le brevet N° 69.13803 et illustré sur ses figures 4 à 7.

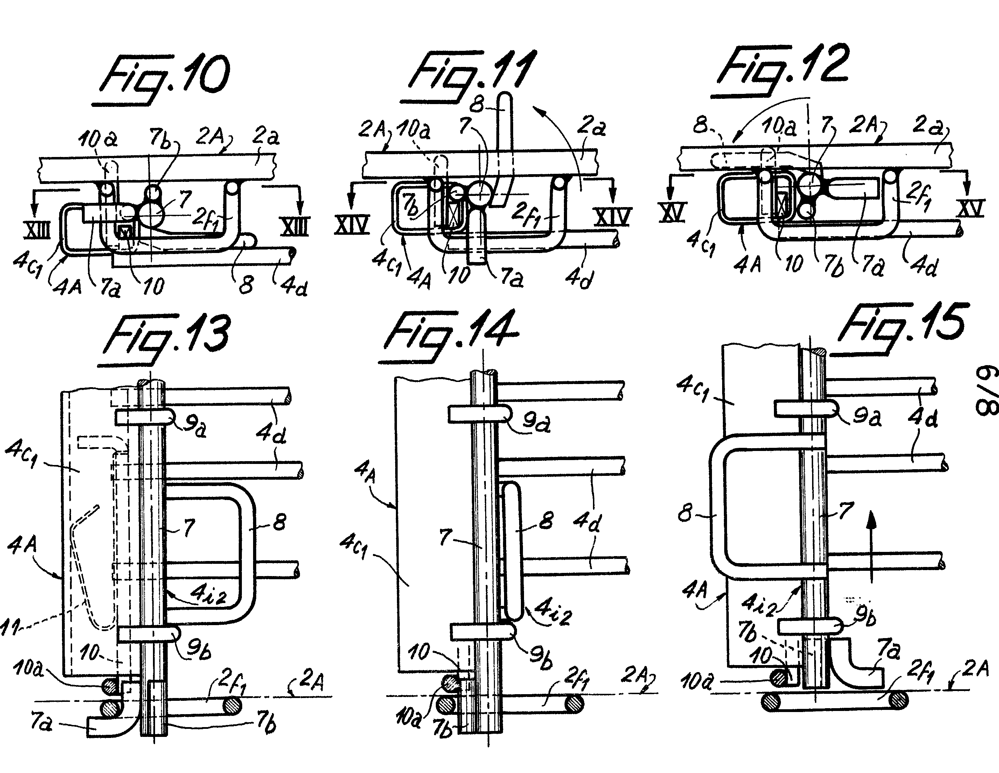

Chacun des deux loquets, $4i_1$ et $4i_2$, dont est pourvu chacun des deux demi-panneaux amovibles, 4A et 4B, peut être réalisé par exemple comme illustré sur les figures 10 à 15. Le loquet à crochet, $4i_1$, illustré sur ces figures, est constitué essentiellement par une tige métallique, 7, sur la partie médiane de laquelle est fixée, notamment par soudage, une poignée de manoeuvre, 8, et qui est montée librement coulissante dans deux oeillets, 9$\underline{a}$, 9$\underline{b}$, eux-mêmes soudés sur l'une des extrémités du profilé, $4c_1$, du demi-panneau 4A (ou 4B). Sur l'extrémité de la tige, 7, du loquet qui fait légèrement saillie au-delà de l'extrémité correspondante du profilé $4c_1$, sont soudés, d'une part, un crochet 7$\underline{a}$, opposé à la poignée, 8, par rapport à la tige 7, et, d'autre part, une came, 7$\underline{b}$, matérialisée par exemple par un élément de tige cylindrique. A l'intérieur du profilé creux, $4c_1$, est d'autre part monté le levier 10 d'un verrou, dont une extrémité sort dudit profilé, $4c_1$, et est soudée à un organe de libération du verrou, 10$\underline{a}$ ; à l'intérieur du profilé creux $4c_1$, le levier 10 du verrou est normalement soumis, de la part d'une lame de ressort 11, à une poussée tendant à appliquer l'extrémité dudit levier, 10, contre la paroi intérieure dudit profilé $4c_1$ - notamment à section

transversale rectangulaire -, qui est la plus voisine de la tige 7 du loquet. Le loquet à crochet, muni de son verrou à ressort, qui vient d'être décrit, fonctionne de la façon suivante, illustrée sur les figures 10 à 15 :

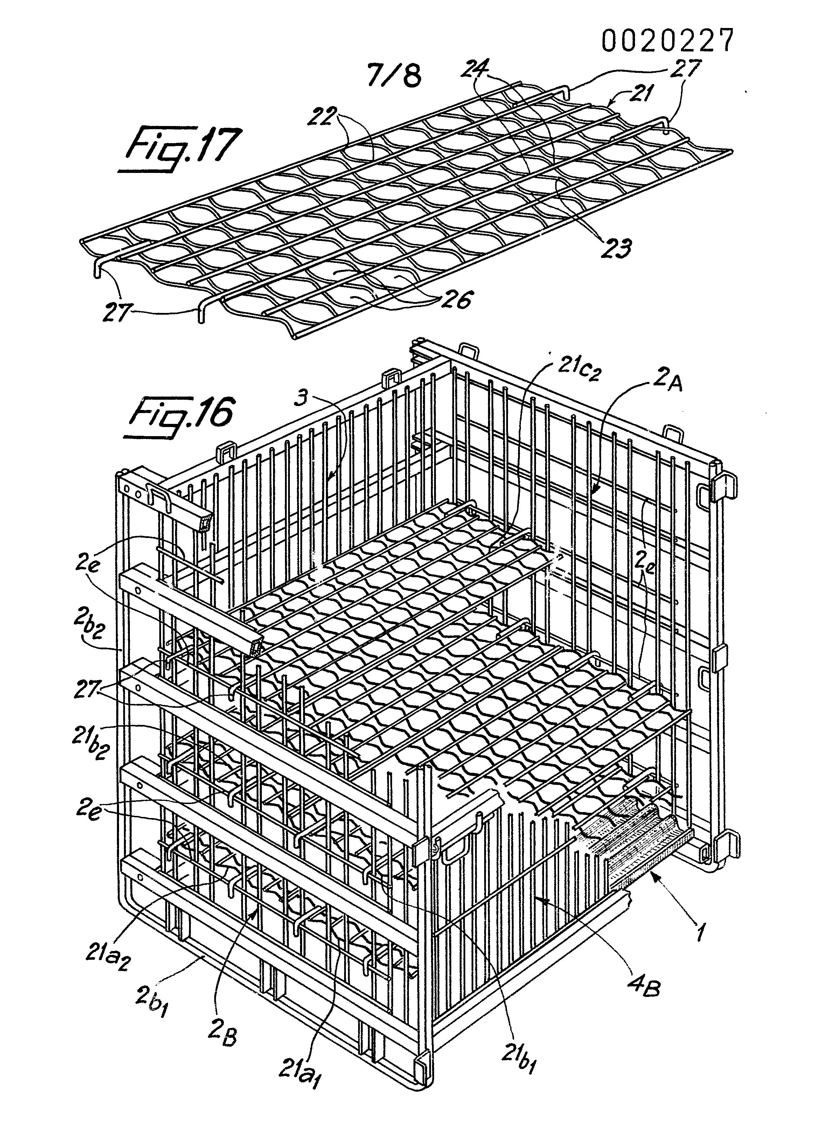

Dans la position de verrouillage illustrée sur les figures 10 et 13, la poignée 8 du loquet est appliquée contre les fils, $4\underline{d}$, du demi-panneau 4A ; la tige, 7, du loquet forme une saillie maximale au-delà de l'extrémité inférieure (sur la figure 13) du profilé $4c_1$, de telle façon que son crochet, $7\underline{a}$, est engagé dans l'ouverture formée par la boucle $2f_1$ du panneau latéral correspondant, 2B, et coopère avec ladite boucle $2f_1$ de manière à assujettir au panneau 2B le demi-panneau amovible 4A. Le loquet $7-7\underline{a}$, est maintenu dans cette position de verrouillage par l'extrémité du levier, 10, du verrou, laquelle s'oppose à toute rotation du crochet, $7\underline{a}$, dans le sens inverse des aiguilles d'une montre (sur la figure 10), que l'on tenterait de produire en faisant pivoter la tige 7 dans le même sens, au moyen de sa poignée 8. Pour que ce dernier mouvement, de déverrouillage, devienne possible, il faut exercer manuellement sur l'organe $10\underline{a}$ une action tendant à écarter l'extrémité du levier, 10, du verrou de la paroi interne correspondante du profilé creux, $4c_1$, en surmontant l'action élastique de la lame de ressort 11. En effet, il devient possible d'amener la poignée, 8, du loquet d'abord dans la position perpendiculaire aux fils, $4\underline{d}$, du demi-panneau 4A, qui est illustrée sur les figures 11 et 14, puis enfin de rabattre ladite poignée, 8, par dessus le profilé $4c_1$ du demi-panneau 4A, comme illustré sur les figures 12 et 15 ; lorsque l'on relâche alors l'organe de commande $10\underline{a}$ du verrou, l'extrémité de son levier 10 n'est plus en position d'agir sur le crochet 7a soudé à la tige 7 du loquet, ni sur la came 7b qui y est également soudée ; il est devenu possible de faire coulisser ladite tige, 7, du loquet dans le sens indiqué sur la figure 15, de façon à faire sortir le crochet $7\underline{a}$ de la boucle $2f_1$ du panneau 2B. Lorsque le loquet $4i_2$, disposé à l'autre extrémité du profilé $4c_1$ du demi-panneau 4A a été libéré par une manoeuvre identique, il devient possible d'enlever le demi-panneau 4A du casier, en exerçant sur lui une traction permettant de faire sortir les chevilles $4g_1$ et $4g_2$, solidaires de son profilé $4c_2$, hors des trous $4h_1$ et $4h_2$ du profilé $4c_1$ du demi-panneau 4B. Après la remise en place de chaque demi-panneau amovible tel que 4A, son verrouillage a lieu de la façon suivante : en agissant sur la poignée 8 on fait tout d'abord coulisser la tige 7 du loquet $4i_1$ dans le sens opposé à celui de la flèche indiquée sur la figure 15, de façon à réintroduire le crochet 7$\underline{a}$ dans la boucle $2f_1$ du panneau latéral 2B ; on fait ensuite pivoter la tige 7 du loquet à l'aide de la poignée 8 dans le sens inverse de celui des flèches indiquées sur les figures 12 et 11, de façon à rabattre ladite poignée 8 au contact des fils 4$\underline{d}$ du demi-panneau 4A ; au cours de ces derniers mouvements de la poignée 8, la came 7$\underline{b}$, qui est soudée à l'extrémité de la tige 7 du loquet, repousse l'extrémité du levier 10 du verrou en surmontant la force de la lame de ressort 11, pour permettre la rotation de la tige 7 entre les positions illustrées respectivement sur les figures 12 et 11 ; ensuite, c'est la partie du crochet 7$\underline{a}$, soudée à l'extrémité de la tige 7, qui repousse l'extrémité du levier 10 du verrou en surmontant la force de la lame 11, pour permettre audit crochet 7$\underline{a}$ d'atteindre la position de verrouillage représentée sur les figures 10 et 13. Dans la position intermédiaire du loquet $4i_2$, qui est illustrée sur les figures 11 et 14, son crochet 7a reste engagé dans la boucle $2f_1$, mais la came 7b est effacée, alors que, en position de verrouillage (figure 10), elle empêchait tout mouvement du demi-panneau amovible 4A en direction du profilé 2a du panneau latéral voisin 2A, c'est-à-dire vers l'extérieur du casier. Par suite, avant de décharger le casier par son ouverture supérieure, en particulier à l'aide de suçoirs, il faut amener tous les loquets $4i_1$, $4i_2$ dans leur position intermédiaire (figures 11 et 14), et repousser légèrement les demi-panneaux 4A, 4B, vers l'extérieur du casier, de façon à desserrer les bouteilles à décharger. Bien entendu, les mouvements des demi-panneaux 4A, 4B vers l'extérieur sont arrêtés par la coopération des tiges 7 des loquets avec les éléments 2a des panneaux latéraux voisins tels que 2A.

Après traitement, le casier ainsi rempli de bouteilles peut être vidé manuellement, d'abord par sa face supérieure ouverte, puis, de préférence, par une paroi latérale amovible du casier. Cependant, l'enlèvement ou l'ouverture, même partiel, de cette paroi latérale n'est pas sans créer un risque de renversement, hors du casier, au moins des bouteilles des couches supérieures qui sont les plus proches de ladite paroi latérale amovible. De même, chaque fois qu'une rangée de bouteilles est enlevée manuellement, la rangée de bouteilles la plus voisine peut s'en trouver déséquilibrée, et certaines au moins des bouteilles de cette rangée voisine peuvent tomber et éventuellement se briser.

Selon une autre caractéristique de l'invention des grilles planes, dont les ouvertures juxtaposées sont adaptées aux cols des bouteilles, sont fixées de façon amovible aux parois latérales du casier, parallèlement à son fond, à des hauteurs appropriées au-dessus dudit fond pour que chaque grille supporte les cols des bouteilles d'une même couche, placées verticalement avec leurs goulots tournés vers le bas.

Grâce à cette disposition, chaque bouteille d'une même couche est supportée dans le casier par la grille correspondante, dans une ouverture de laquelle est engagé son col. De ce fait, l'extraction manuelle d'une bouteille hors du casier ne peut pas avoir pour effet de déséquilibrer les bouteilles voisines de la même couche, puisque celles-ci continuent à être supportées par la grille correspondante.

Dans une forme de réalisation préférée de l'invention, l'une des parois latérales du casier parallélépipédique est montée de façon amovible pour faciliter l'extraction des bouteilles en position verticale, et chaque grille est divisée en au moins deux éléments indépendants suivant un plan parallèle à ladite paroi latérale amovible du casier.

Cette forme de réalisation facilite encore davantage le déchargement manuel du casier, qui a lieu alors de la façon suivante : la paroi latérale amovible du casier est tout d'abord enlevée ou ouverte, au moins partiellement, ce qui a pour effet de dégager l'accès aux rangées superposées de bouteilles, les plus voisines de ladite paroi latérale. Ceci rend aisé l'enlèvement manuel tout d'abord de la demi-couche supérieure des bouteilles supportées par la demi-grille supérieure, puis de ladite demi-grille supérieure, ensuite de la demi-couche de bouteilles immédiatement inférieure, et de la demi-grille correspondante, et ainsi de suite jusqu'à ce que soit terminée l'extraction hors du casier, de toutes les bouteilles qui étaient supportées par les demi-grilles superposées, les plus proches de la paroi amovible du casier. Tout aussi aisé est ensuite l'enlèvement manuel des demi-couches superposées de bouteilles, qui subsistent dans le casier, contre sa paroi latérale opposée à sa paroi amovible, les demi-grilles correspondantes étant également enlevées au fur et à mesure que se déroule cette seconde phase du déchargement du casier.

Comme visible sur la figure 16, le casier est en forme de parallélépipède rectangle, et il comporte les six parois suivantes : son fond 1 est constitué essentiellement par une tôle, présentant des nervures parallèles, régulières, 1a, vers l'intérieur du casier ; deux parois latérales fixes, 2A et 2B, comportent chacune, à la partie inférieure, un premier patin, 2b1, et, latéralement, un second patin, 2b2 ; entre ces deux parois latérales 2A et 2B, s'étend une troisième paroi latérale fixe, 3 ; la face du casier, opposée à sa paroi latérale fixe 3, peut être fermée par une paroi latérale amovible, en deux parties, dont seule la partie inférieure, 4B, est représentée partiellement sur la figure 16, sa partie supérieure (4A) étant supposée enlevée. Comme décrit dans le brevet principal, les quatre parois latérales 2A, 2B, 3 et 4A - 4B du casier sont formées essentiellement, dans cette forme de réalisation, par des tiges ou fils métalliques, rigides, qui sont disposés transversalement les uns aux autres, et soudés en leurs points de croisement.

La figure 17 représente en perspective un élément de grille 21, qui, dans cette forme de réalisation, est également formé par des tiges métalliques rigides, 22, disposées les unes parallèlement aux autres, et avec un espacement régulier, ainsi que par des fils métalliques rigides, 23, disposés transversalement aux tiges 22 et soudés à celles-ci en leurs points de croisement tels que 24. Les fils métalliques 24 sont eux-mêmes pliés, de façon à délimiter, avec les tiges métalliques 22, des ouvertures juxtaposées 26, formant un réseau régulier à deux dimensions, et ayant chacune une forme adaptée à la section transversale du col de chacune des bouteilles de vin à traiter par la méthode champenoise. L'élément de grille 21 ainsi formé a sensiblement une forme rectangulaire allongée, et ses deux petits côtés sont munis de crochets ouverts 27, par exemple soudés à certaines des tiges 22 ; ces crochets 27 sont disposés de manière à pouvoir coopérer avec certains des fils métalliques horizontaux 2e qui font partie des parois latérales fixes, 2A et 2B du casier, comme visible sur la figure 16.

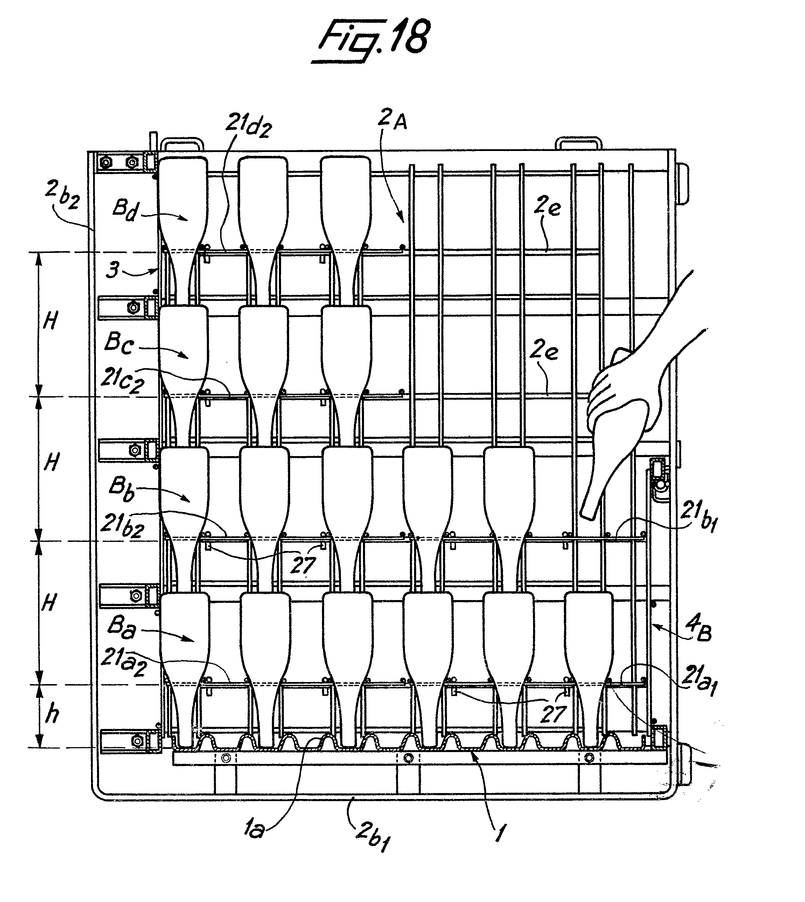

Dans le cas du casier pris à titre d'exemple, qui est destiné à contenir quatre couches superposées de bouteilles (dont les deux couches intérieures Ba et Bb sont seules visibles sur la figure 18), ledit casier est équipé intérieurement, selon la présente invention, avec huit éléments de grille tels que 21 (figure 17), qui sont fixés de façon amovible, par leurs crochets respectifs 27, aux parois latérales 2A et 2B du casier, parallèlement à son fond 1, à des hauteurs appropriés (désignées par h et H sur la partie gauche de la figure 3) au-dessus dudit fond 1, pour que chaque grille supporte les cols des bouteilles d'une même couche, telles que Ba ou Bb, lesdites bouteilles étant placées verticalement avec leurs goulots tournés vers le bas comme visible sur la partie inférieure de la figure 18. Dans l'exemple considéré, le casier selon la présente invention est donc équipé de quatre paires d'éléments de grille, 21a1-21a2, 21b1-21b2, 21c1-21c2, 21d1-21d2 (non visibles sur la figure 16), qui sont groupés par paires, respectivement dans quatre plans horizontaux, séparés du fond 1 du casier, ainsi que les uns des autres, respectivement par des distances verticales h et H, déterminées comme visible sur la figure 18 : la hauteur h est choisie de telle façon que, les bouteilles de la couche inférieure Ba étant placées verticalement avec leurs cols respectifs engagés dans les ouvertures juxtaposées des éléments de grille 21a1 et 21a2, les extrémités inférieures des goulots desdites bouteilles sont engagées respectivement entre les nervures 1a du fond 1 du casier, et viennent éventuellement s'appliquer sur ce fond 1 ; la distance H est choisie de façon que, par exemple, les bouteilles de la seconde couche Bb étant placées verticalement avec leurs cols respectifs engagés dans les ouvertures juxtaposées des éléments de grille 21b1 et 21b2, les extrémités inférieures de leurs goulots se trouvent un peu au-dessus des fonds des bouteilles de la couche inférieure Ba, ou éventuellement engagées dans les parties rentrantes de leurs fonds respectifs.

Lorsque le casier précédemment décrit a été complètement rempli avec les quatre couches de bouteilles, et qu'il a été soumis au traitement selon la méthode champenoise, ledit casier repose sur le sol par ses patins 2b1, les différentes bouteilles B y étant placées verticalement avec leurs goulots tournés vers le bas, comme visible sur la figure 18.

Le déchargement du casier est alors effectué de la façon suivante : la face supérieure du casier étant dégagée, on enlève tout d'abord l'élément supérieur de sa paroi latérale 4A - 4B, ce qui a pour effet de dégager latéralement la rangée de la couche supérieure de bouteilles, la plus voisine de ladite paroi latérale. Il n'y a cependant aucun risque de chute de bouteilles hors du casier du fait que chaque bouteille est supportée par l'élément de grille 21 correspondant. On procède alors aisément à l'enlèvement des bouteilles qui sont supportées par l'élément supérieur de grille, 21d1, le plus proche de la face latérale ouverte du casier, puis l'on retire cet élément de grille 21d1 en le soulevant de façon à dégager ses crochets 27 des fils horizontaux correspondants, 2e, des parois latérales 2A et 2B dudit casier. Cette opération a pour effet de dégager les fonds des bouteilles de la couche immédiatement inférieure, qui sont supportées par l'élément de grille 21c1. On procède alors à l'enlèvement de cette demi-couche de bouteilles et de l'élément de grille 21c1, de la façon précédemment décrite. Après avoir enlevé l'élément inférieur 4B de la paroi latérale amovible du casier, on répète les opérations précédentes pour les demi-couches de bouteilles supportées respectivement par les éléments de grille 21b1 et 21a1. Il ne reste plus alors dans le casier que les demi-couches, superposées, de bouteilles, qui sont supportées respectivement par les éléments de grille 21a2, 21b2, 21c2, et 21d2, les plus proches de la paroi latérale 3 du casier. Leur déchargement manuel s'effectue en commençant évidemment par la demi-couche supérieure, supportée par l'élément de grille 21d2, qui est ensuite enlevé pour pouvoir procéder au déchargement successif des trois autres demi-couches inférieures.

La présente invention n'est pas limitée à la forme de réalisation précédemment décrite. Elle englobe toutes ses variantes. Les différents éléments de grille 21 sont susceptibles de réalisations diverses, de même que leurs organes d'accrochage aux parois latérales du casier ; chaque élément de grille peut être constitué par exemple par une tôle perforée. Les parois latérales du casier peuvent être munies intérieurement de crochets, destinés à coopérer avec des trous aménagés dans les bords des éléments de grille. La présente invention est également applicable aux casiers, dont les parois latérales ne sont pas grillagées, mais constituées en tôle pleine ou ajourée. Au lieu d'être divisée, en deux éléments suivant un plan parallèle à la paroi latérale amovible du casier, chaque grille telle que 21a1-21a2 dudit casier pourrait être divisée en plus de deux éléments suivant des plans parallèles à ladite paroi latérale amovible ; chaque grille pourrait aussi être constituée par un élément

0020227

unique, dans le cas notamment d'un casier présentant une largeur relativement faible dans la direction perpendiculaire à sa paroi latérale amovible. La présente invention est également applicable aux casiers de faible hauteur, destinés par exemple à contenir seulement une ou deux couches superposées de bouteilles, et ne comportant pas, par suite, de paroi latérale amovible, mais quatre parois latérales fixes.

REVENDICATIONS DE BREVET

1 - Appareillage permettant de traiter du vin en bouteilles selon la méthode champenoise, comportant un casier en forme de parallélépipède rectangle, ouvert sur une face, qui est opposée à un fond, muni d'éléments d'appui pour les goulots d'une couche de bouteilles, remplissant complètement ledit casier éventuellement avec plusieurs autres couches superposées de bouteilles, calées les unes contre les autres, ledit casier comportant deux séries de pieds ou patins permettant de le poser dans une première position, où les bouteilles sont couchées, et une seconde position, perpendiculaire à la première, où les bouteilles sont verticales avec leur goulot tourné vers le bas, et étant caractérisé en ce que les parois latérales du casier perpendiculaires à son fond sont pourvues, vers l'intérieur du casier, de rails, disposés perpendiculairement au fond du casier de manière à guider l'introduction des bouteilles, en position couchée, par la face ouverte du casier, et à assurer le calage des bouteilles placées contre lesdites parois latérales.

2 - Appareillage selon la revendication 1, caractérisé en ce que les rails de guidage desdites parois latérales du casier sont constitués par des tiges ou des fils rigides, fixés, notamment soudés sur les faces intérieures desdites parois latérales.

3 - Appareillage selon la revendication 2, caractérisé en ce que chacune desdites parois latérales est formée essentiellement, vers l'intérieur du casier, par les tiges ou fils constituant les rails, et, vers l'extérieur, par des fils ou tiges rigides, ou des profilés, transversaux, soudés aux précédents, ainsi que, par leurs extrémités, à des profilés rigides, formant les bords de la paroi.

4 - Appareillage selon l'une quelconque des revendications 1 à 3, caractérisé en ce que le casier, en forme de parallélépipède rectangle, a l'une de ses parois latérales, perpendiculaires au fond du casier, qui est montée de façon amovible, notamment de façon à pouvoir être au moins en partie enlevée ou rabattue vers le fond, pour faciliter l'extraction des bouteilles en position verticale.

5 - Appareillage selon la revendication 4, caractérisé en ce que la paroi amovible du casier comprend deux parties amovibles, séparément, se raccordant dans un plan horizontal, de préférence à mi-hauteur de la paroi amovible.

6 - Appareillage selon l'une quelconque des revendications 4 et 5, caractérisé en ce que le bord inférieur de chaque partie de la paroi amovible comporte des chevilles pouvant être engagées dans des trous correspondants du bord du fond du casier ou du bord supérieur de la partie immédiatement inférieure de ladite paroi amovible, et que le bord supérieur de chaque partie de la paroi amovible est muni, à ses extrémités, de loquets à crochet, aménagés de façon à coopérer avec les bords d'ouvertures correspondantes des deux parois latérales, voisines, du casier.

7 - Appareillage selon la revendication 6, caractérisé en ce qu'un verrou à ressort, libérable manuellement, est associé à chaque loquet pour l'immobiliser en position de coopération du crochet avec le bord de l'ouverture correspondante de la paroi latérale voisine.

8 - Appareillage selon la revendication 7, caractérisé en ce que la tige de chaque loquet présente une saillie latérale, par exemple à angle droit du crochet correspondant, saillie qui, en position de verrouillage coopère avec un bord de l'ouverture correspondante de la paroi latérale voisine, de façon à arrêter tout mouvement de la paroi amovible vers l'extérieur du casier, tandis que, pour une position angulaire de la tige du loquet, intermédiaire entre ses positions de verrouillage et de déverrouillage, ladite saillie latérale est effacée, de façon à autoriser un petit mouvement de la paroi amovible vers l'extérieur du casier, permettant de desserrer les bouteilles à décharger qu'il contient, ce petit mouvement de la paroi amovible étant cependant limité par la coopération de la tige dudit loquet avec ledit bord de l'ouverture de la paroi voisine.

9 - Appareillage selon l'une quelconque des revendications 1 à 8, caractérisé en ce que la face ouverte du casier, opposée à son fond, peut être fermée par une paroi amovible, qui peut être assujettie par tous moyens appropriés aux bords supérieurs d'au moins deux des parois latérales du casier.

10 - Appareillage selon l'une quelconque des revendications 1 à 9, caractérisé en ce que le fond du casier comporte, vers l'intérieur du casier, une tôle nervurée ou ondulée, dont les nervures sont adaptées pour recevoir entre elles les goulots des bouteilles.

11 - Appareillage permettant de traiter du vin en bouteilles selon la méthode champenoise, comportant un casier parallélépipédique, ouvert sur une face, opposée à un fond, lequel est muni intérieurement d'éléments d'appui pour les goulots de la couche inférieure des bouteilles superposées, qui sont calées les unes contre les autres de façon à remplir complètement ledit casier, selon la revendication 1, appareillage caractérisé en ce que des grilles planes dont les ouvertures juxtaposées sont adaptées aux cols des bouteilles, sont fixées de façon amovible aux parois latérales du casier, parallèlement à son fond, à des hauteurs appropriées au-dessus dudit fond pour que chaque grille supporte les cols des bouteilles d'une même couche, placées verticalement avec leurs goulots tournés vers le bas.

12 - Appareillage selon la revendication 11, caractérisé en ce que l'une des parois latérales du casier parallélépipédique est montée de façon amovible pour faciliter l'extraction des bouteilles en position verticale, et que chaque grille est divisée en au moins deux éléments indépendants suivant un plan parallèle à ladite paroi latérale amovible du casier.

13 - Appareillage selon la revendication 11, caractérisé en ce que les différentes grilles ou éléments de grille, de même que les parois latérales du casier, sont formées essentiellement par des tiges ou fils rigides, disposés transversalement les uns aux autres, et soudés en leurs points de croisement, et que certains des bords de chaque grille ou élément de grille sont munis de crochets ouverts, destinés à coopérer avec certains des tiges ou fils des parois latérales du casier.

_Fig.1_

_Fig.2_

0020227

*Fig.3*

Fig.4

Fig.5

Fig.6

Fig.7

0020227

_Fig.8_

2B

3

2b₂

1

2A

4B

2b₁

_Fig.9_

B″₁₂  B″₁₁

2d

e₃

e₂

B′₁₂  B′₁₁

2B

e₃

B₁₃  B₁₂  B₁₁

2d

e₂

3d  3d  3d

e₁  e₂  e₁  e₂  e₁

3

3f₁

0020227

7/8

Fig.17

Fig.16

*Fig.18*

Office européen
des brevets

**RAPPORT DE RECHERCHE EUROPEENNE**

002022 7

Numéro de la demande

EP 80 40 0676

| Catégorie | Citation du document avec indication, en cas de besoin, des parties pertinentes | Revendication concernée |
|---|---|---|
| D | <u>FR - A - 2 041 582</u> (C.D.E. CAZALS et al.) <br><br> * Revendications 1,2; page 2, ligne 29 - page 4, ligne 40; figures 1-3 * <br><br> -- | 1-3 |
| | <u>FR - A - 2 300 807</u> (S.I.C.A.M.) <br> * Revendications 1,6,9; figures 2,3; page 4, lignes 20-33 * <br><br> -- | 1,4 |
| | <u>FR - A - 483 351</u> (J.M.A. FLEURENCE et al.) <br><br> * Résumé 1; page 2, lignes 1-10 * <br><br> -- | 1-3,11 |
| | <u>FR - A - 2 034 398</u> (APPALETTE) <br> * Revendications 1,5,6; figures 4-7; page 4, ligne 25 - page 5, ligne 17 * <br><br> -- | 1,4-8, 10-13 |
| | <u>FR - A - 1 172 368</u> (F.M.J.P. BARBIER) <br> * Résumé; figures 3,6; page 1, colonne 1, lignes 25-49 * <br><br> ---- | 1,11, 13 |

**DOCUMENTS CONSIDERES COMME PERTINENTS**

**CLASSEMENT DE LA DEMANDE (Int. Cl. 3)**

C 12 G 1/06
C 12 L 11/00

**DOMAINES TECHNIQUES RECHERCHES (Int. Cl. 3)**

C 12 G 1/06

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 04-09-1980 | VAN MOER |

OEB Form 1503.1   06.78